# EUROPÄISCHE PATENTSCHRIFT

(11) **EP 1 957 226 B1**
(45) Veröffentlichungstag und Bekanntmachung des Hinweises auf die Patenterteilung: **04.12.2013**
(21) Anmeldenummer: 06805387.5
(22) Anmeldetag: 09.10.2006
(51) Int. Cl.: B23K 3/03, B23K 3/047

(54) **LÖTVORRICHTUNG MIT RECHNERBASIERTEM SENSORSYSTEM**
SOLDERING DEVICE WITH COMPUTER-BASED SENSOR SYSTEM
DISPOSITIF DE BRASAGE DOTE D'UN SYSTEME DE DETECTION ASSISTE PAR ORDINATEUR

(30) Priorität: 14.11.2005 DE 102005054521
(43) Veröffentlichungstag der Anmeldung: 20.08.2008
(73) Patentinhaber: Ersa GmbH, 97877 Wertheim (DE)
(72) Erfinder: WEISSENBERGER, Eugen, 97776 Eussenheim (DE); ALLETZHÄUSER, Thomas, 97877 Wertheim-Dörlesberg (DE); MOLZER, Hans, 74736 Hardheim (DE); KÖNIG, Georg, 97877 Wertheim-Mondfeld (DE)
(74) Vertreter: Böck, Bernhard
(86) Internationale Anmeldenummer: PCT/DE2006/001769
(87) Internationale Veröffentlichungsnummer: WO 2007/054045

(56) Entgegenhaltungen:
- EP-A1- 0 021 046
- EP-A1- 0 337 065
- WO-A1-01/32347
- DE-A1- 19 736 129
- US-A- 5 062 564
- US-A- 5 408 072
- US-A- 5 412 178
- US-A1- 2005 121 495

## Beschreibung

Die Erfindung betrifft eine Lötvorrichtung zum Verlöten von Werkstücken nach dem Oberbegriff des Hauptanspruchs.

Gattungsgemäße Lötvorrichtungen lassen sich bezüglich ihrer Heizleistung häufig schwer regeln. Einerseits ist es problematisch sämtliche Umgebungsbedingungen durch Sensoren zu erfassen, da es häufig an einfachen Möglichkeiten zur Detektion sämtlicher Umgebungsbedingungen fehlt. Selbst wenn diese Möglichkeiten vorhanden sein sollten, dann stellt sich häufig das Problem, die Anschlüsse der Sensoren einfach aus der Lötvorrichtung herauszuführen und einer Steuerungseinheit zuzuführen.

Die EP 0 337 065 zeigt beispielsweise eine Lötvorrichtung mit mehreren Sensorelementen. Eine Rechnereinheit 8 ist in einer externen Steuereinheit angeordnet, wobei dieser die Signale der Sensorelemente der Lötvorrichtung übermittelt werden. Zudem sollen an diese Rechnereinheit noch weitere Lötvorrichtungen anschließbar sein.

Aus der US 2005/0121495 ist ein Lötsystem bekannt, bei dem das Signal eines Sensors über eine Steckerverbindung an eine Steuereinheit weitergeleitet wird, in der dann eine Rechnereinheit angeordnet ist.

Gleiches gilt auch für die US 5,412,178. Für die dort beschriebene Lötvorrichtung ist eine Rechnereinheit in einem externen Steuergerät angeordnet, mit dem die Lötvorrichtung über eine Steckervorrichtung verbunden wird und an das die Daten eines Temperatursenders übermitelt werden.

Auch in der US 5,408,072 werden die Daten eines Temperatursensors an einen externen Controller übertragen, an den die Lötvorrichtung über eine Steckerverbindung angeschlossen wird.

Auch die US 5,062,564, die dem Oberbegriff vom Anspruch 1 zugrundeliegt, beschreibt eine Lötstation, die als externe Steuereinheit eines Lötkolbens bzw. einer Lötvorrichtung zum Verlöten von Werkstücken ausgebildet ist. Dabei ist vorgesehen, dass die Lötstation einen Microprozessor aufweist, der Sensorsignale eines Temperatursensors verarbeitet. Zudem ist gemäß der Lehre der Druckschrift eine zur Lötstation wiederum externe Datenverarbeitungsanlage vorgeschlagen, die zur Aufzeichnung und Speicherung von Betriebsdaten der Lötstation eingerichtet ist.

Die Lötvorrichtung der EP 0 021 046 schließlich ist nicht mit einer externen Steuereinheit verbindbar; vielmehr wird diese Lötvorrichtung direkt an eine Stromsteckdose angeschlossen.

Aus der WO 01/32347 A1 ist zudem ein Schweißgerät und ein Verfahren zur Datenübertragung und/oder Synchronisierung zwischen zumindest zwei Schweißgeräten bekannt. Dabei wird auf eine Versorgungs- bzw. Notzleitung ein Kommunikationssignal aufmoduliert bzw. aus diesem Signal demoduliert, wobei jedoch die Schweißgeräte alle Komponenten zur Steuerung selbst umfassen.

Aufgabe der vorliegenden Erfindung ist es eine neue Lötvorrichtung vorzuschlagen.

Diese Aufgabe wird durch die vorliegende Erfindung nach der Lehre des Hauptanspruchs gelöst.

Vorteilhafte Ausführungsformen der Erfindung sind Gegenstand der Unteransprüche.

Erfindungsgemäß wird das Problem dadurch gelöst, dass die Lötvorrichtung zum Verlöten von Werkstücken zumindest ein Heizelement, zumindest zwei Heizstromzuleitungen und zumindest einen Sensor aufweist, wobei das Heizelement über die Heizstromzuleitungen mit einem Heizstrom versorgt werden kann, und wobei die Lötvorrichtung eine Rechnereinheit aufweist, wobei der Sensor mit der Rechnereinheit verbunden ist.

Erfindungsgemäß handelt es sich bei der Lötvorrichtung um einen zum Anschluss an eine Steuerungseinheit vorgesehenen Lötkolben.

Die Ausführungsform des Heizelementes ist ebenfalls grundsätzlich beliebig. Das Heizelement dient der Beheizung der Lötspitze und wird über die zwei Heizstromzuleitungen mit Strom versorgt.

Weiterhin kann die Lötvorrichtung zumindest einen Sensor aufweisen. Der Sensor kann beliebige physikalische Größen, insbesondere eine Temperatur messen. Es ist besonders vorteilhaft auf Grundlage dieser Messungen den Heizstrom für das Heizelement zu regeln.

Es reicht jedoch häufig nicht aus die Regelung des Heizstroms auf die Messung eines einzigen Sensors zu basieren. So ist es beispielsweise vorteilhaft die Temperatur an verschiedenen Orten innerhalb der Lötvorrichtung zu messen. Dies kann beispielsweise die Temperatur an der Lötspitze, die Temperatur des Heizelements oder auch die Temperatur im Griffbereich der Lötvorrichtung sein. Auch ein Sensor in Form eines Identifikationssensors der der Lötvorrichtung eine eindeutige Identifikationskennung verleiht ist denkbar.

Das Auslesen der Sensoren erfolgt zumeist von einer Steuerungseinrichtung die sich innerhalb oder außerhalb der Lötvorrichtung befinden kann. Bei signifikantem örtlichen Abstand der Sensoren von der Steuerungseinrichtung werden bei einer Mehrzahl von Sensoren eine Vielzahl von Verbindungsleitungen zwischen den Sensoren und der Steuerungseinrichtung erforderlich.

Bekannt ist es auch, jedem Sensor einen Wandlerbaustein zuzuordnen und die Zuleitungen zu den Sensoren nach dem OneWire-Prinzip zu bündeln. Jedoch sind hierfür einerseits viele Wandlerbausteine und andererseits spezielle Sensoren bzw. Aktoren notwendig. Diese speziellen Sensoren bzw. Aktoren haben den Nachteil, dass Sie einerseits in Ihrer Funktion sehr inflexibel sind und auch teuer in der Herstellung und Beschaffung sind.

Die erfindungsgemäße Lötvorrichtung weist eine Rechnereinheit auf wobei der oder die Sensoren mit der Rechnereinheit verbunden ist bzw. verbunden sind. Die Zuleitungen der Sensoren können somit relativ kurz gehalten werden. Die weitere Verbindung zur Steuerungseinheit erfolgt zwischen Rechnereinheit und Steuerungseinheit. Diese Verbindung wird zumeist über eine überschaubaren Anzahl weniger Zuleitungen realisiert.

Das Auslesen der Sensoren erfolgt mittelbar über die Rechnereinheit. So kann die Rechnereinheit bei Bedarf beispielsweise veranlasst werden die Verbindung zu einem bestimmten Sensor herzustellen. Die Messung kann dann von der Rechnereinheit durchgeführt und der ermittelte Messwert beispielsweise an die Steuerungseinheit weitergeleitet werden oder es kann beispielsweise auch der Sensor auf die Verbindungsleitung von Rechnereinheit zur Steuerungseinheit aufgeschaltet werden.

Somit ist eine Vielzahl von Messwerten über eine minimale Anzahl von Anschlussleitungen verfügbar. Dies bietet eine maximale Flexibilität und einen minimalen Verdrahtungsaufwand.

Auch eine Erweiterung der Sensorik der Lötvorrichtung durch beispielsweise hinzufügen eines weiteren Sensors ist mit minimalem Installationsaufwand möglich. So ist es lediglich erforderlich, den weiteren Sensor an die Rechnereinheit anzuschließen.

Auch eine digitale Verbindung mehrerer Lötvorrichtungen beispielsweise in einem Bus-System ist einfach realisierbar.

Weiterhin wirkt sich die zusammenfassende Weiterleitung der Sensorinformationen von Rechnereinheit zu beispielsweise Steuerungseinheit positiv auf den Durchmesser und das Gewicht dieser Verbindungsleitung zwischen Rechnereinheit und beispielsweise Steuerungseinheit aus. Auch ein Griffbereich einer Lötvorrichtung und die Größe von Steckverbindern kann schlanker gestaltet werden. Weiterhin sinkt eine Fehleranfälligkeit der Datenübertragung da die elektromagnetischen Wechselwirkungen zwischen den Sensoranschlussleitungen reduziert sind.

Erfindungsgemäß ist die Rechnereinheit mit den Rechnereinheitzuleitungen nach der Idee des Onewire-Prinzips verbunden. Dabei dienen die Rechnereinheitzuleitungen einerseits zur Spannungsversorgung der Rechnereinheit und andererseits gleichzeitig zur bidirektionalen Kommunikation mit der Rechnereinheit. Bei dieser Ausführungsform sind Kommunikationsleitungen und Versorgungsleitungen zur Rechnereinheit miteinander vereint.

Ebenfalls erfindungsgemäß sind die Rechnereinheitzuleitungen der Lötvorrichtung an eine Steuerungseinheit anschließbar, wobei die Steuerungseinheit mit der Rechnereinheit der Lötvorrichtung über die Rechnereinheitzuleitungen kommunizieren kann.

So ist die Steuerungseinheit einerseits für die Versorgung der Lötvorrichtung mit Heizstrom verantwortlich und andererseits auch für die Regelung des Heizstroms beispielsweise zum Schutz der Bauelemente der Lötvorrichtung. Um eine zuverlässige Regelung durch die Steuerungseinheit zu gewährleisten ist die Steuerungseinheit auf Daten von Sensoren in der Lötvorrichtung angewiesen.

Bei der vorgeschlagenen Verbindung über die Rechnereinheitzuleitungen sendet die Steuerungseinheit beispielsweise einen Abfragebefehl an die Rechnereinheit in der Lötvorrichtung und veranlasst diese dadurch den entsprechenden Sensor anzusprechen. Als Rückmeldung erhält die Steuerungseinheit dann beispielsweise den Messwert des Sensors oder einen Zugriff auf den Sensor.

Die Ausführungsform der Rechnereinheit ist grundsätzlich beliebig. In einer besonderen Ausführungsform ist die Rechnereinheit durch einen Mikrocontroller realisiert. Dies bietet insbesondere den Vorteil, dass die Rechnereinheit flexibel anpassbar ist und sogar Berechnungen durchführen kann.

Weiterhin bietet diese Ausführungsform den Vorteil, dass auf separate Wandlerbausteine zur Bündelung der Sensordaten weitgehend verzichtet werden kann. Das System wird kostengünstiger und flexibler in Gestaltung, Ausführung und Erweiterbarkeit.

Die Art und Weise wie mit der Rechnereinheit kommuniziert werden kann ist grundsätzlich beliebig. Besonders vorteilhaft ist es jedoch wenn die Rechnereinheit mit zumindest zwei Rechnereinheitzuleitungen verbunden ist, wobei zumindest eine Rechnereinheitzuleitung mit zumindest einer Heizstromzuleitung identischist, und wobei mit der Rechnereinheit über die Rechnereinheitzuleitungen kommuniziert werden kann. Dann nämlich kann beispielsweise von außen auf die Rechnereinheit innerhalb der Lötvorrichtung zugegriffen werden. Die Verbindung einer Lötvorrichtung beispielsweise mit einer Steuervorrichtung erfolgt dann lediglich über eine der Heizstromzuleitungen und eine weitere Zuleitung. Weitere Verbindungsleitungen sind in diesem Fall nicht erforderlich. Die Verbindungsleitung, die eine Lötvorrichtung mit beispielsweise einer Steuerungseinrichtung verbindet, kann bezüglich ihres Durchmesser sehr klein gehalten werden. Die Flexibilität einer solchen Leitung erfährt ebenfalls Vorteile. Auch die Steckverbinder der Verbindungsleitungen können kleiner dimensioniert werden. Durch die zusätzliche Rechnereinheitzuleitung können die Potentiale von Heizelement und Rechnereinheit darüber hinaus entkoppelt werden.

Es kann sich auch als vorteilhaft erweisen, die Rechnereinheit mit zwei separaten Rechnereinheitzuleitungen zu verbinden, die jeweils nicht mit einer der Heizstromzuleitungen identisch sind. Beispielsweise können dann weitere Störungen zwischen Heizelement und Rechnereinheit vermieden werden.

Andererseits ist es aber auch möglich, dass die Rechnereinheitzuleitungen und die Heizstromleitungen paarweise identisch sind. Dann werden zur Verbindung von Heizelement und Rechnereinheit nach Außen nur die Heizstromzuleitungen benötigt.

Die Kommunikation mit der Rechnereinheit über die Rechnereinheitzuleitungen ist grundsätzlich beliebig. Besonders vorteilhaft ist eine Kommunikation mit einem digitalen Übertragungsprotokoll. Eine solche Übertragung wird in der Regel seriell stattfinden. Dazu kann zunächst eine Anfrage an die Rechnereinheit bezüglich eines bestimmten Sensors gestellt werden und die Rechnereinheit sorgt sodann für die Abfrage des gewünschten Sensors.

Die Abfrage kann beispielsweise derart gestaltet sein, dass die Rechnereinheit den Messwert nach außen weiterleitet oder aber lediglich dafür sorgt, dass über die Rechnereinheitzuleitungen der gewünschte Sensor erreichbar ist.

In einer weiteren vorteilhaften Ausführungsform wird zwischen dem Heizelement und den Heizstromzuleitungen zumindest ein Thermoelement gebildet, an dem zumindest eine Thermospannung abgreifbar ist.

Diese Merkmalskombination ist jedoch keinesfalls ausschließlich in Verbindung mit dieser Erfindung wirkungsvoll. Auch eine Realisierung eines Heizelementes basierend allein auf dieser Merkmalskombination bringt dieselben Vorteile. Diese Merkmalskombination muss nicht zwingend in Verbindung mit einer Lötvorrichtung realisiert werden. Heizelemente als solche mit diesen Merkmalen erweisen sich ebenfalls als vorteilhaft. Derartige Heizelemente können dann beispielsweise in Kaffeemaschinen und in Kunststoffspritzwerkzeugen Verwendung finden.

Weiterhin kann ein derartiges Heizelement in einer Lötvorrichtung vorteilhaft sein. Dies ist beispielsweise eine Lötvorrichtung zum Verlöten von Werkstücken, wobei die Lötvorrichtung zumindest ein Heizelement und zumindest zwei Heizstromzuleitungen aufweist, und wobei das Heizelement über die Heizstromzuleitungen mit einem Heizstrom versorgt werden kann und wobei zwischen dem Heizelement und den Heizstromzuleitungen zumindest ein Thermoelement gebildet wird, an dem zumindest eine Thermospannung abgreifbar ist.

Über den Effekt der Thermospannung lässt sich die Temperatur der das Thermoelement bildenden Elemente bestimmen. Das Thermoelement wird wie hier vorgeschlagen aus Heizelement und den Heizstromzuleitungen gebildet. Heizelement und Heizstromzuleitungen sind besonders schutzbedürftig. So sind neuere Heizelemente bei Lötvorrichtungen immer kleiner und immer leistungsstärker. Bei falscher Behandlung oder bei fehlender zu beheizender Masse, wie beispielsweise abgezogener Lötspitze, kann das Heizelement überlastet und anschließend zerstört werden. Eine Überwachung der Temperatur des Heizelementes ist von besonderer Bedeutung. Da die Temperatur des Heizelementes jedoch nicht zwingend der Temperatur in der Lötspitze entspricht sollte die Temperatur des Heizelementes direkt am oder noch besser im Heizelement selbst bestimmt werden. Der Thermoeffekt bietet dazu eine besonders geeignete Möglichkeit.

Wird beispielweise während des Betriebs der Lötvorrichtung eine Lötspitze von der Lötvorrichtung entfernt so kann die Energie des Heizelementes nicht mehr nach außen hin abgegeben werden. Es besteht die Gefahr, dass das Heizelement durch Durchbrennen zerstört wird. Die Temperatur des Heizelementes steigt an. Mit der steigenden Temperatur steigt jedoch aber auch die Thermospannung am vom Heizelement und den Heizstromzuleitungen gebildeten Thermoelement an. Somit kann bei einer Regelung des Heizstroms durch beispielweise einer Steuerungseinrichtung die Temperatur des Heizelementes abgefragt werden und bei ansteigender Temperatur des Heizelementes der Heizstrom entsprechend abgeregelt werden.

Diese Temperaturmessung dient jedoch zunächst nur der Bestimmung der Temperatur des Heizelements. Die Temperatur der eigentlichen Lötspitze wird in der Regel durch einen separaten Temperaturfühler bestimmt.

Ein weiterer Vorteil der Bildung des Thermoelementes zwischen Heizelement und Heizstromzuleitungen besteht darin, dass keine aufwendigen zusätzlichen Installationen notwendig sind. So ist es lediglich erforderlich die am Thermoelement beteiligten Elemente aus geeigneten metallischen Materialien zu fertigen.

Die Ausführungsform von Heizelement und Heizstromzuleitungen sind grundsätzlich beliebig. In einer besonders vorteilhaften Ausführungsform besteht das Heizelement aus einem ersten die erste Heizstromzuleitung aus einem zweiten und die zweite Heizstromzuleitung aus einem dritten metallischen Material. Dies bietet eine besonders flexible Herstellung und auch Nachrüstung des Thermoelementes.

Die gleichen Wirkungen können auf noch einfachere Art und Weise erzielt werden, wenn lediglich die Enden eines das Heizelement bildenden Heizwendels mit einem am Thermoelement beteiligten metallischen Material versehen werden.

Das Heizelement selbst oder lediglich die Enden eines das Heizelement bildenden Heizwendels können beispielsweise aus einer NiCr-Legierung bestehen. Die erste Heizstromzuleitung kann in diesem Fall beispielsweise aus einem Nickeldraht und die zweite Heizstromzuleitung aus einem Eisendraht bestehen.

Weiterhin können beispielsweise Paarungen aus Platin, Platin-Rhodium, Konstantan und/oder Kupfer und/oder weiteren zur Bildung eines Thermoelementes geeigneten Legierungen oder metallischen Materialien zum Einsatz kommen.

Dieses als Temperatursensor fungierende Thermoelement kann grundsätzlich in analoger Weise betrieben werden. Dazu müsste eine Spannungsmessung zwischen den Heizdrähten durchgeführt werden. Diese Spannungsmessung kann beispielsweise innerhalb der Lötvorrichtung vorgenommen werden aber andererseits beispielsweise auch von einer Steuerungseinheit an die die Lötvorrichtung mit ihren Heizstromzuleitungen angeschlossen ist.

In einer weiteren vorteilhaften Ausführungsform ist das Thermoelement als Sensor an die Recheneinheit anschließbar. Dadurch ist eine einfache Möglichkeit der Temperaturmessung des Heizelementes ohne nennenswert vergrößerten Installationsaufwand beschrieben. Die Recheneinheit bestimmt dann beispielsweise die Spannung zwischen den Heizstromzuleitungen oder ermöglicht beispielsweise einer Steuerungseinrichtung die Messung der Spannung zwischen den Heizstromzuleitungen.

In einer weiteren vorteilhaften Ausführungsform weist die Lötvorrichtung einen Sensor zur Detektion einer Nutzung und/oder einer Bewegung der Lötvorrichtung auf.

Ein derartiger Sensor kann eine Nutzung und/oder eine Bewegung der Lötvorrichtung detektieren bzw. ob sich die Lötvorrichtung in einer Ruhephase befindet. Dieses Sensorergebnis kann beispielsweise dazu herangezogen werden eine Nutzung der Lötvorrichtung zu detektieren. So sind Lötvorrichtungen nämlich während des Lötvorgangs zumeist bewegt insbesondere dann wenn sie zur Lötstelle hin oder von der Lötstelle weg bewegt werden. Während der Ruhezeiten währenddessen die Lötvorrichtung nicht bewegt wird kann beispielsweise die Heizstromzufuhr unterbrochen werden. Die Lötvorrichtung wird dann in einen Stand-by-Zustand versetzt.

Dies schont insbesondere die beteiligten Bauteile wie beispielsweise Heizelement und Lötspitze, reduziert darüber hinaus aber auch den Energieverbrauch. Weiterhin ist diese Art der Detektion der Bewegung bzw. Benutzung einer Lötvorrichtung wartungsfrei und kontaktlos. Bisherige Lösungen waren nämlich beispielsweise auf zusätzliche mechanische und/oder elektrische oder elektromechanische Anbauteile angewiesen. Dies war beispielsweise über elektrische Verbindungen zwischen Lötvorrichtung und Ablageständer realisiert. Weiterhin bedingen diese Lösungen einen hohen Aufwand bezüglich elektrischer Leitungsführung, mechanischen Vorrichtungen zur Aufnahme von Sensoren und Aktoren, sowie deren Ansteuerung und Auswertung. Häufig war bei solchen Lösungen systembedingt auch die Zuverlässigkeit der Funktion eingeschränkt.

Die Ausführungsform des Sensors zur Detektion einer Nutzung und/oder einer Bewegung der Lötvorrichtung ist grundsätzlich beliebig. In einer besonders bevorzugten Ausführungsform ist der Sensor jedoch als Beschleunigungssensor ausgebildet. Dies ermöglicht eine einfache und kostengünstige Detektion der Bewegung bzw. Nutzung einer Lötvorrichtung. Derartige Sensoren sind als Zukaufbauteile günstig erhältlich und können darüber hinaus einfach ausgewertet werden.

Eine weitere vorteilhafte Ausführungsform besteht in der Ausführung des Sensor als Näherungssensors. Wenn sich beispielsweise eine menschliche Hand der Lötvorrichtung nähert, kann meistens davon ausgegangen werden, dass eine unverzügliche Nutzung kurz bevor steht und bei Entfernen der menschlichen Hand ist der Lötkolben aller Wahrscheinlichkeit nach abgelegt worden.

Die vorgeschlagene Bewegungsdetektion ist nicht zwangsläufig auf einen Anschluss an das erfindungsgemäße rechnerbasierte Sensorsystem angewiesen, sondern kann auch als analoge selbstständige Lösung in eine Lötvorrichtung implementiert werden. In einem solchen Fall wird auf den Bewegungssensor direkt zugegriffen.

Es ist aber auch denkbar den Bewegungssensor an die Rechnereinheit anzuschließen. In diesem Fall ergeben sich die oben beschriebenen vorteilhaften Wirkungen.

Die Auswertung der Messdaten des Sensors zur Detektion einer Nutzung und/oder einer Bewegung der Lötvorrichtung ist grundsätzlich beliebig. Vorteilhaft ist es, die Bewegung der Lötvorrichtung in einem virtuellen Koordinatensystem aufzuzeichnen. Dazu können die Daten des Sensors zur Detektion einer Nutzung und/oder einer Bewegung der Lötvorrichtung als Grundlage dienen.

Häufig werden derartige Lötvorrichtungen auch in Roboteranlagen benutzt. Hier ist möglich, die zwei- oder dreidimensionale Bewegungskurve aufzuzeichnen, um die Bewegungsbahn der Lötspitze nachvollziehen zu können.

In einer weiteren vorteilhaften Ausführungsform wird die Bewegungskurve zusammen mit den jeweils an den einzelnen Orten der Bahnkurve bestimmten Temperaturen an der Lötspitze und deren Bestimmungszeit für Archiv- und Kontrollzwecke aufgezeichnet.

Auf die Lötvorrichtung aufsetzbare Lötspitzen sollten zum Schutz der Lötvorrichtung und zum störungsfreien Betrieb der Lötvorrichtung bezüglich Form und Masse optimal auf die Heizelementgeometrie abgestimmt sein. Es sollte sich insbesondere zum Schutz des Heizelements eine optimale Wärmeankopplung zwischen Heizelement und Lötspitze ergeben.

Innendurchmesser und Innengeometrie sowie Außendurchmesser und Außengeometrie der Lötspitzen sollten ebenso wie die Gesamtlänge ideal an die Geometrie und Länge des Heizelementes angepasst sein.

Eine Ausführungsform der Erfindung ist in der Zeichnung dargestellt und wird nachfolgend beispielhaft erläutert.

Es zeigt:

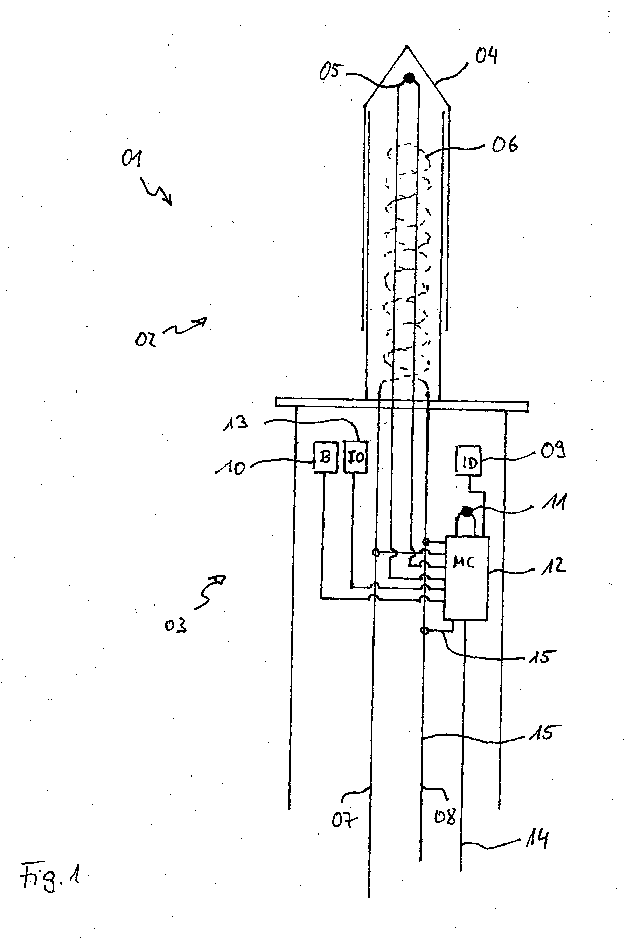

- **Fig. 1**: eine als Handlötkolben ausgebildete Lötvorrichtung in schematischer Darstellung.

**Fig. 1** zeigt einen Handlötkolben mit einem Funktionsabschnitt 02 und einem Griffabschnitt 03. Über den Funktionsabschnitt 02 ist eine Lötspitze 04 formschlüssig übergestülpt. Durch die formschlüssige Verbindung ergibt sich eine optimale Wärmeankopplung zwischen Funktionsabschnitt 02 und Lötspitze 04.

Der Funktionsabschnitt 02 weist weiterhin einen Lötspitzentemperatursensor 05 auf. Der Lötspitzentemperatursensor 05 bestimmt die Temperatur an der Lötspitze.

Weiterhin weist der Funktionsabschnitt 02 ein Heizelemente 06 auf. Das Heizelement 06 ist als bifilar gewickelter Heizdraht aus einer NiCr-Legierung gefertigt.

Die jeweils zwei Anschlüsse des Lötspitzentemperatursensors 05 und des Heizelements 06 sind in den Griffabschnitt 03 durchgeführt.

Innerhalb des Griffabschnitts 03 befinden sich zwei Heizstromzuleitungen 07, 08 die an jeweils ein Ende des Heizelementes 06 angeschlossen sind. Die erste Heizstromzuleitung 07 ist aus einem Nickeldraht und die zweite Heizstromzuleitung 08 aus einem Eisendraht gefertigt. Mit ihrem zweiten Ende sind die Heizstromzuleitungen jeweils aus dem Handlötkolben 01 herausgeführt. Durch die drei unterschiedlichen metallischen Materialien des Heizelementes 06 der ersten Heizstromzuleitung 07 und der zweiten Heizstromzuleitung 08 ergibt sich aus Heizelement und den zwei Heizstromzuleitungen ein Thermoelement. Auf Grund des Thermoeffektes kann dadurch die Temperatur des Heizdrahtes selbst bestimmt werden.

Weiterhin enthält der Griffabschnitt 03 einen Identifikationssensor 09. Der Identifikationssensor 09 stellt eine eindeutige Identifikationskennung über die der Handlötkolben 01 identifizierbar ist bereit.

Darüber hinaus ist im Griffabschnitt 03 ein IO-Wandlerbaustein 13 enthalten, über den weitere Sensoren und/oder Aktoren nach einem herkömmlichen Prinzip angeschlossen werden können.

Weiterhin enthält der Griffabschnitt 03 einen Nutzungssensor 10. Über den Nutzungsensor 10 ist eine Bewegung des Handlötkolbens 1 detektierbar. In Phasen der Nichtnutzung kann die Heizstromzufuhr über die Heizstromzuleitungen 07, 08 abgeregelt werden.

Weiterhin enthält der Griffabschnitt 03 einen Griffabschnittstemperatursensor 11. Über den Griffabschnittstemperatursensor 11 lässt sich die Temperatur innerhalb- des Griffabschnitts 03 bestimmen. Dadurch kann beispielsweise eine Verletzung des Bedieners vorgebeugt werden.

Die Anschlussleitungen der Sensoren 05, 06, 07, 08, 09, 10, 11 und 13 werden auf möglichst kurzem Wege zu einer in den Handlötkolben 01 integrierten Rechnereinheit 12 eingangsseitig weitergeleitet. Die Rechnereinheit 12 ist hier als Mikrocontroller ausgeführt. Ausgangsseitig ist die Rechnereinheit 12 wiederum mit den Rechnereinheitzuleitungen 14 und 15 verbunden. Darüber kann von außen beispielsweise eine Steuerungseinheit mit der Rechnereinheit 12 kommunizieren.

In diesem Ausführungsbeispiel ist die Heizstromzuleitung 08 und die Rechnereinheitzuleitung 15 identisch. Der Verdrahtungsaufwand aus dem Handlötkolben 01 heraus beschränkt sich somit auf die zwei Heizstromzuleitungen 07 und 08 sowie die zusätzliche Rechnereinheitzuleitung 14.

Die Rechnereinheitszuleitungen können jedoch auch jeweils separat aus der Lötvorrichtung herausgeführt werden ohne beispielsweise mit einer der Heizstromzuleitungen identisch zu sein. Daraus ergeben sich dann die bereits oben beschriebenen Vorteile.

Die gesamte Verbindungsleitung zwischen Handlötkolben 01 und einem weiteren Gerät ist somit besonders unkompliziert und einfach aufgebaut.

## Patentansprüche

1. Lötvorrichtung (01) zum Verlöten von Werkstücken, wobei die Lötvorrichtung (01) als Lötkolben ausgeführt ist, der zum Anschluss an eine Steuerungseinheit vorgesehen ist, mit mindestens einem Heizelement (06), zumindest zwei Heizstromzuleitungen (07, 08) für das Heizelement (06) und zumindest einem Sensor (05, 06 , 07, 08, 09, 10, 11, 13), der mit einer Rechnereinheit (12) verbunden ist, und wobei das Heizelement über die Heizstromzuleitungen (07, 08) mit einem Heizstrom versorgt werden kann,
**dadurch gekennzeichnet,**
**dass** die Rechnereinheit (12) in der Lötvorrichtung (01) angeordnet ist und über Rechnereinheitzuleitungen (14, 15) nach der Idee des Onewire-Prinzips mit einer außerhalb der Lötvorrichtung angeordneten Steuerungseinheit verbindbar ist, wobei die Rechnereinheitzuleitungen (14, 15) einerseits zur Spannungsversorgung der Rechnereinheit (12) und anderseits auch zur bidirektionalen Kommunikation zwischen der Rechnereinheit (12) und der Steuereinheit dienen.

2. Lötvorrichtung nach Anspruch 1,
**dadurch gekennzeichnet,**
**dass** die Rechnereinheit (12) durch einen Mikrocontroller realisiert ist.

3. Lötvorrichtung nach Anspruch 1 oder 2,
**dadurch gekennzeichnet,**
**dass** die Rechnereinheit (12) mit zumindest zwei Rechnereinheitzuleitungen (14, 15) verbunden ist, wobei zumindest eine Rechnereinheitzuleitung (15) mit zumindest einer Heizstromzuleitung (08) identisch ist, und wobei mit der Rechnereinheit (12) über die Rechnereinheitzuleitungen (14, 15) kommuniziert werden kann.

4. Lötvorrichtung nach einem der Ansprüche 1 bis 3,
**dadurch gekennzeichnet,**
**dass** zwischen dem Heizelement (06) und den Heizstromzuleitungen (07, 08) zumindest ein Thermoelement gebildet wird, an dem zumindest eine Thermospannung abgreifbar ist.

5. Lötvorrichtung nach einem der Ansprüche 1 bis 4,
**dadurch gekennzeichnet,**
**dass** das Heizelement (06) aus einem ersten, die erste Heizstromzuleitung (07) aus einem zweiten und zweite Heizstromzuleitung (08) aus einem dritten metallischen Material besteht.

6. Lötvorrichtung nach Anspruch 4 oder 5,
**dadurch gekennzeichnet,**
**dass** das Thermoelement als Sensor an die Recheneinheit (12) anschließbar ist.

7. Lötvorrichtung nach einem der Ansprüche 1 bis 6,
**dadurch gekennzeichnet,**
**dass** die Lötvorrichtung (01) einen Sensor (10) zur Detektion einer Nutzung und/oder einer Bewegung der Lötvorrichtung (01) aufweist.

8. Lötvorrichtung nach Anspruch 7,
**dadurch gekennzeichnet,**
**dass** der Sensor (10) zur Detektion einer Nutzung und/oder einer Bewegung der Lötvorrichtung (01) als Beschleunigungssensor ausgebildet ist.

9. Lötvorrichtung nach Anspruch 7 oder 8,
**dadurch gekennzeichnet,**
**dass** zumindest über den Sensor (10) zur Detektion einer Nutzung und/oder einer Bewegung der Lötvorrichtung (01) eine mehrdimensionale Bewegungskurve bestimmt wird.

10. Lötvorrichtung nach Anspruch 9,
**dadurch gekennzeichnet,**
**dass** die Bewegungskurve zusammen mit einer korrelierenden Temperatur und einer korrelierenden Zeit aufgezeichnet wird.

## Claims

1. A soldering device (01) for soldering work pieces, wherein the soldering device (01) is realised as a soldering iron designed for being connected to a control unit, said soldering device comprising at least one heating element (06), at least two heating current supply lines (07, 08) for the heating element (06) and at least one sensor (05, 06, 07, 08, 09, 10, 11, 13) being connected to a computer unit (12), and wherein the heating element can be supplied with a heating current via the heating current supply lines (07, 08),
**characterised in that**
the computer unit (12) is arranged inside the soldering device (01) and is connectable to a control unit arranged outside the soldering device via computer unit supply lines (14, 15) in accordance with the One Wire principle, wherein on the one hand the computer unit supply lines (14, 15) serve for supplying the computer unit (12) with voltage, and on the other hand also serve for the bidirectional communication between the computer unit (12) and the control unit.

2. The soldering device according to Claim 1,
**characterised in that**
the computer unit (12) is realised in the form of a microcontroller.

3. The soldering device according to Claim 1 or 2,
**characterised in that**
the computer unit (12) is connected to at least two computer unit supply lines (14, 15), wherein at least one computer unit supply line (15) is identical to at least one heating current supply line (08), and wherein it is possible to communicate with the computer unit (12) via the computer unit supply lines (14, 15).

4. The soldering device according to one of Claims 1 to 3,
**characterised in that**
at least one thermal element, on which at least one thermal voltage can be tapped, is formed between the heating element (06) and the heating current supply lines (07, 08).

5. The soldering device according to one of Claims 1 to 4,
**characterised in that**
the heating element (06) consists of a first metallic material, the first heating current supply line (07) consists of a second metallic material and the second heating current supply line (08) consists of a third metallic material.

6. The soldering device according to Claim 4 or 5,
**characterised in that**
the thermal element can be connected to the computer unit (12) in the form of a sensor.

7. The soldering device according to one of Claims 1 to 6,
**characterised in that**
the soldering device (01) features a sensor (10) for detecting a use and/or a movement of the soldering device (01).

8. The soldering device according to Claim 7,
**characterised in that**
the sensor (10) for detecting a use and/or a movement of the soldering device (01) is realised in the form of an acceleration sensor.

9. The soldering device according to Claim 7 or 8,
**characterised in that**
a multidimensional motion curve is defined at least by the sensor (10) for detecting a use and/or a movement of the soldering device (01).

10. The soldering device according to Claim 9,
**characterised in that**
the motion curve is recorded together with a correlating temperature and a correlating time.

## Revendications

1. Dispositif de brasage (01) pour braser des pièces à usiner, le dispositif de brasage (01) étant configuré comme un fer à souder qui est destiné à être raccordé à une unité de commande, ayant au moins un élément de chauffage (06), au moins deux lignes (07, 08) d'alimentation en courant de chauffage pour l'élément de chauffage (06) et au moins un capteur (05, 06, 07, 08, 09, 10, 11, 13) qui est connecté à une unité d'ordinateur (12), et l'élément de chauffage pouvant être alimenté en courant de chauffage à travers des lignes (07, 08) d'alimentation en courant de chauffage,
**caractérisé en ce que**
l'unité d'ordinateur (12) est arrangée dans le dispositif de brasage (01) et peut être connectée à une unité de commande, qui est arrangée en dehors du dispositif de brasage, à travers des lignes (14, 15) d'alimentation de l'unité d'ordinateur selon le principe One Wire, les lignes (14, 15) d'alimentation de l'unité d'ordinateur servant, d'un côté, pour l'alimentation en tension de l'unité d'ordinateur (12) et, de l'autre côté, également pour la communication bidirectionnelle entre l'unité d'ordinateur (12) et l'unité de commande.

2. Dispositif de brasage selon la revendication 1,
**caractérisé en ce que**
l'unité d'ordinateur (12) est réalisée par un microcontrôleur.

3. Dispositif de brasage selon la revendication 1 ou 2,
**caractérisé en ce que**
l'unité d'ordinateur (12) est connectée à au moins deux lignes (14, 15) d'alimentation de l'unité d'ordinateur, au moins une ligne (15) d'alimentation de l'unité d'ordinateur étant identique à au moins une ligne (08) d'alimentation en courant de chauffage, et la possibilité existant de communiquer avec l'unité d'ordinateur (12) à travers les lignes (14, 15) d'alimentation de l'unité d'ordinateur.

4. Dispositif de brasage selon l'une quelconque des revendications 1 à 3,
**caractérisé en ce qu'**
au moins un thermocouple, sur lequel au moins une tension thermoélectrique peut être prélevée, est formé entre l'élément de chauffage (06) et les lignes (07, 08) d'alimentation en courant de chauffage.

5. Dispositif de brasage selon l'une quelconque des revendications 1 à 4,
**caractérisé en ce que**
l'élément de chauffage (06) consiste en un premier matériau métallique, la première ligne (07) d'alimentation en courant de chauffage consiste en un deuxième matériau métallique et la deuxième ligne (08) d'alimentation en courant de chauffage consiste en un troisième matériau métallique.

6. Dispositif de brasage selon la revendication 4 ou 5,
**caractérisé en ce que**
le thermocouple peut être raccordé à l'unité d'ordinateur (12) en tant que capteur.

7. Dispositif de brasage selon l'une quelconque des revendications 1 à 6,
**caractérisé en ce que**
le dispositif de brasage (01) comprend un capteur (10) pour détecter une utilisation et/ou un mouvement du dispositif de brasage (01).

8. Dispositif de brasage selon la revendication 7,
**caractérisé en ce que**
le capteur (10) pour détecter une utilisation et/ou un mouvement du dispositif de brasage (01) est formé en tant que capteur d'accélération.

9. Dispositif selon la revendication 7 ou 8,
**caractérisé en ce qu'**
au moins à travers le capteur (10) pour détecter une utilisation et/ou un mouvement du dispositif de brasage (01), une courbe multidimensionnelle de mouvement est déterminée.

10. Dispositif de brasage selon la revendication 9,
**caractérisé en ce que**
la courbe de mouvement est enregistrée conjointement avec une température corrélée et avec un temps corrélé.
